# EUROPÄISCHE PATENTSCHRIFT

(11) **EP 0 974 247 B1**
(45) Veröffentlichungstag und Bekanntmachung des Hinweises auf die Patenterteilung: **24.03.2004**
(21) Anmeldenummer: 99907281.2
(22) Anmeldetag: 27.01.1999
(51) Int. Cl.: H05B 41/24

(54) **SCHALTUNGSANORDNUNG ZUM BETRIEB MINDESTENS EINER ELEKTRODENLOSEN ENTLADUNGSLAMPE**
CIRCUIT FOR ACTUATING AT LEAST ONE ELECTRODELESS DISCHARGE LAMP
CIRCUITERIE POUR ACTIONNER AU MOINS UNE LAMPE A DECHARGE SANS ELECTRODES

(30) Priorität: 10.02.1998 DE 19805314
(43) Veröffentlichungstag der Anmeldung: 26.01.2000
(73) Patentinhaber: Patent-Treuhand-Gesellschaft für elektrische Glühlampen mbH, 81543 München (DE)
(72) Erfinder: SCHLEICHER, Gotthard, D-83308 Trostberg (DE)
(86) Internationale Anmeldenummer: PCT/DE1999/000196
(87) Internationale Veröffentlichungsnummer: WO 1999/041954

(56) Entgegenhaltungen:
- EP-A- 0 016 542
- EP-A- 0 198 632
- WO-A-96/30983
- GB-A- 2 305 311

## Beschreibung

Die Erfindung betrifft eine Schaltungsanordnung zum Betrieb mindestens einer elektrodenlosen Entladungslampe gemäß dem Oberbegriff des Patentanspruchs 1.

### I. Technisches Gebiet

Der Begriff elektrodenlose Entladungslampe bezeichnet hier eine induktiv angeregte Gasentladungslampe. Diese Gasentladungslampe besitzt ein lichtdurchlässiges Entladungsgefäß mit einer darin eingeschlossenen ionisierbaren, zur Gasentladung anregbaren Füllung. Die Anregung der Gasentladung erfolgt mittels einer oder mehrerer Induktionsspulen mit geschlossenem Ferritkern, die außen am Entladungsgefäß befestigt sind. Die Induktionsspulen, die mit einer hochfrequenten Wechselspannung beaufschlagt werden, sind derart angeordnet, daß sie ein elektrisches Feld in das Entladungsgefäß einspeisen, welches die ionisierbare Füllung im Inneren des Entladungsgefäßes zur Gasentladung anregt. Diese Gasentladung besitzt - im Unterschied zu der Gasentladung, die in den weit verbreiteten Leuchtstofflampen mit in das Entladungsgefäß hereinragenden Elektroden stattfindet - einen ringförmig geschlossenen Entladungsweg. Eine genauere Beschreibung einer elektrodenlosen Entladungslampe ist beispielsweise in der internationalen Offenlegungsschrift WO 97/10610 offenbart. Die Erfindung betrifft insbesondere eine Schaltungsanordnung zum Betrieb einer derartigen elektrodenlosen Entladungslampe.

### II. Stand der Technik

Eine dem Oberbegriff des Patentanspruchs 1 entsprechende Schaltungsanordnung ist beispielsweise in der Patentschrift US 5,063,332 beschrieben. Diese Schaltungsanordnung weist einen Halbbrückenwechselrichter mit nachgeschaltetem Resonanzkreis auf, an den die Induktionsspule einer elektrodenlosen Entladunsglampe angeschlossen ist. Ein Nachteil dieser Schaltungsanordnung besteht darin, daß sie auch bei fehlender Lampe noch arbeitet.

Die Offenlegungsschrift WO 96/30983 offenbart eine Schaltungsanordnung für eine Leuchtstofflampe mit einem Wechselrichter, einer Kontrollschaltung für den Wechselrichter und einer Schutzschaltung zur Detektion des Lampenstroms. Die Schutzschaltung ist an die Kontrollschaltung gekoppelt, so dass der Wechselrichter abgeschaltet wird, wenn keine Lampe angeschlossen ist.

Die Offenlegungsschrift EP 0 198 632 A2 offenbart eine Schaltungsanordnung für Leuchtstofflampen mit einem Transistor-Oszillator und Mitteln zur Detektion defekter Lampenelektroden und zur Abschaltung des Transistor-Oszillators im Fall einer defekten Lampenelektrode.

### III. Darstellung der Erfindung

Es ist die Aufgabe der Erfindung, eine Schaltungsanordnung zum Betrieb mindestens einer elektrodenlosen Entladungslampe bereitzustellen, die nur dann die zur Zündung der Gasentladung benötigte Zündspannung erzeugt, wenn mindestens eine Lampe an die dafür vorgesehene elektrischen Anschlüsse der Schaltungsanordnung angeschlossen ist.

Diese Aufgabe wird erfindungsgemäß durch die kennzeichnenden Merkmale des Patentanspruchs 1 gelöst. Besonders vorteilhafte Ausführungen der Erfindung sind in den Unteransprüchen beschrieben.

Die erfindungsgemäße Schaltungsanordnung zum Betrieb mindestens einer elektrodenlosen Entladungslampe besitzt mindestens einen Spannungseingang zur Spannungsversorgung der Schaltungsanordnung und elektrische Anschlüsse für mindestens eine elektrodenlose Entladungslampe und ist erfindungsgemäß mit Kontrollmitteln ausgestattet, die die Präsenz oder das Fehlen der mindestens einen elektrodenlosen Entladungslampe feststellen und die das Bereitstellen der Zünd- und/oder Betriebsspannung für die mindestens eine elektrodenlose Entladungslampe erst dann ermöglichen, wenn die mindestens eine elektrodenlose Entladungslampe an die elektrischen Anschlüsse angeschlossen ist. Die Kontrollmittel der erfindungsgemäßen Schaltungsanordnung weisen einen Strompfad und einen Strom- oder Spannungsdetektor auf, wobei der Strompfad einen ersten elektrischen Widerstandswert besitzt, wenn die mindestens eine Entladungslampe an die Schaltungsanordnung angeschlossen ist, und einen anderen elektrischen Widerstandswert besitzt, wenn keine Entladungslampe an die Schaltungsanordnung angeschlossen ist, und wobei der Strom- oder Spannungsdetektor den Stromfluß oder den Spannungsabfall in dem Strompfad überwacht. Um die Präsenz oder das Fehlen der mindestens einen elektrodenlosen Entladungslampe mit einfachen Mitteln feststellen zu können, ist wenigstens eine Induktionsspule der mindestens einen elektrodenlosen Entladungslampe in dem Strompfad angeordnet. Der Strompfad ist vorteilhafterweise derart ausgebildet, daß er beim Fehlen der mindestens einen elektrodenlosen Entladungslampe unterbrochen ist. Ferner sind die elektrischen Anschlüsse für die mindestens eine elektrodenlose Entladungslampe vorteilhafterweise in dem Strompfad angeordnet. Bei dem Strompfad handelt es sich vorteilhafterweise um einen Gleichstrompfad.

Durch diese Maßnahmen wird gewährleistet, daß bei fehlender Lampe nicht die zum Lampenbetrieb erforderliche Zünd- oder Betriebsspannung erzeugt wird. Bei nicht angeschlossener Lampe würde nämlich die extrem hohe Zündspannung zu einer Zerstörung der Schaltungsanordnung führen. Ist hingegen die mindestens eine elektrodenlose Entladungslampe an die elektrischen Anschlüsse angeschlossen, so dämpfen die magnetischen Verluste in der mindestens einen Induktionsspule der elektrodenlose Entladungslampe die Zündspannung vor erfolgter Lampenzündung so stark, daß eine zerstörende Wirkung auf die Komponenten der Schaltungsanordnung vermieden wird. Wenn nicht wenigstens eine Induktionsspule mindestens einer elektrodenloser Entladungslampe angeschlossen ist, dann erfolgen keine Zündversuche.

Vorteilhafterweise weist die erfindungsgemäße Schaltungsanordnung mindestens einen Spannungswandler und eine Steuerschaltung für den mindestens einen Spannungswandler sowie einen, dem mindestens einen Spannungswandler nachgeschalteten Lastkreis auf, wobei die Kontrollmittel mit der Steuerschaltung derart zusammenwirken, daß die Steuerschaltung nur dann Ansteuerungsimpulse für den mindestens einen Spannungswandler generiert, wenn die mindestens eine elektrodenlose Entladungslampe an die elektrischen Anschlüsse angeschlossen ist. Dadurch kann der Spannungswandler seinen Betrieb erst dann aufnehmen, wenn die mindestens eine elektrodenlose Entladungslampe an die dafür vorgesehenen elektrischen Anschlüsse angeschlossen ist. Der Spannungswandler ist vorteilhafterweise als Wechselrichter mit nachgeschaltetem Resonanzkreis ausgebildet, so daß die zur Zündung der Gasentladung in der mindestens einen elektrodenlosen Entladungslampe erforderliche Zündspannung auf einfache Weise mittels der Methode der Resonanzüberhöhung generiert werden kann. Die Steuerschaltung des Spannungsteilers ist vorteilhafterweise als Integrierter Schaltkreis ausgebildet.

Als besonders vorteilhaft hat sich eine Schaltungsanordnung zum Betrieb mindestens einer elektrodenlosen Entladungslampe mit mindestens einem Spannungseingang zur Spannungsversorgung der Schaltungsanordnung und elektrischen Anschlüssen für mindestens eine elektrodenlose Entladungslampe erwiesen, die mindestens einen Spannungswandler und eine als Integrierter Schaltkreis ausgebildete Steuerschaltung für den mindestens einen Spannungswandler sowie einen, dem mindestens einen Spannungswandler nachgeschalteten Lastkreis besitzt, und die als Kontrollmittel, welche die Präsenz oder das Fehlen der mindestens einen elektrodenlosen Entladungslampe an den elektrischen Anschlüssen feststellen und die das Bereitstellen der Zünd- oder Betriebsspannung für die mindestens eine elektrodenlose Entladungslampe erst dann ermöglichen, wenn die mindestens eine elektrodenlose Entladungslampe an die elektrischen Anschlüsse angeschlossen ist, einen an einen Spannungsversorgungsanschluß des Integrierten Schaltkreises angeschlossenen Strompfad aufweist, der beim Fehlen der mindestens einen elektrodenlosen Entladungslampe an den elektrischen Anschlüssen unterbrochen ist. Bei fehlender Lampe erhält dadurch der den mindestens einen Spannungswandler ansteuernde Integrierte Schaltkreis keine Versorgungsspannung, so daß der Spannungswandler seinen Betriebtrotz eingeschalteter Netzspannung am Spannungseingang der Schaltungsanordnung - nicht aufnehmen kann.

Gemäß eines anderen bevorzugten Ausführungsbeispiels umfassen die Kontrollmittel vorteilhafterweise einen Abgriff im Lastkreis des mindestens einen Spannungswandlers und ein Überwachungsglied, wobei das elektrische Potential an diesem Abgriff einen ersten Wert besitzt, wenn die mindestens eine Entladungslampe an die Schaltungsanordnung angeschlossen ist, und einen zweiten, anderen Wert besitzt, wenn keine Entladungslampe an die Schaltungsanordnung angeschlossen ist, und wobei das Überwachungsglied das elektrische Potential an dem Abgriff überwacht und ein dem elektrischen Potential entsprechendes Auswertungssignal für die Steuerschaltung des mindestens einen Spannungswandlers erzeugt. Das Überwachungsglied ist vorteilhafterweise als Logische Schaltung ausgebildet, die in die Steuerschaltung integriert oder der Steuerschaltung vorgeschaltet ist.

Nachstehend wird die Erfindung anhand mehrerer bevorzugter Ausführungsbeispiele näher erläutert. Es zeigen:
- Figur 1: eine Schaltskizze des ersten Ausführungsbeispiels der Erfindung in schematischer Darstellung
- Figur 2: eine Schaltskizze des zweiten Ausführungsbeispiels der Erfindung in schematischer Darstellung
- Figur 3: eine Schaltskizze des dritten Ausführungsbeispiels der Erfindung in schematischer Darstellung
- Figur 4: eine Schaltskizze des vierten Ausführungsbeispiels der Erfindung in schematischer Darstellung
- Figur 5: eine Schaltskizze des fünften Ausführungsbeispiels der Erfindung in schematischer Darstellung
- Figur 6: eine Schaltskizze des sechsten Ausführungsbeispiels der Erfindung in schematischer Darstellung
- Figur 7 bis 10: schematische Schaltskizzen gemäß der Ausführungsbeispiele sieben bis zehn für zwei parallel geschaltete, an einem fremdgesteuerten Halbbrückenwechselrichter betriebene elektrodenlose Entladungslampen
- Figur 11: eine schematische Schaltskizze gemäß des elften Ausführungsbeispiels für zwei parallel geschaltete, an einem Vollbrückenwechselrichter betriebene elektrodenlose Entladungslampen
- Figur 12: eine schematische Schaltskizze gemäß des zwölften Ausführungsbeispiels für zwei parallel geschaltete, an einem freischwingenden Halbbrückenwechselrichter betriebene elektrodenlose Entladungslampen
- Figur 13: eine schematische Schaltskizze gemäß des dreizehnten Ausführungsbeispiels für zwei in Reihe geschaltete, an einem Halbbbrückenwechselrichter betriebene elektrodenlose Entladungslampen

### IV. Beschreibung der bevorzugten Ausführungsbeispiele

Die Schaltungsanordnung gemäß des ersten Ausführungsbeispiels der Erfindung besitzt einen Netzspannungseingang mit den Netzspannungsanschlüssen j10, j11, die zur Spannungsversorgung der Schaltungsanordnung dienen. An den Netzspannungseingang sind ein Filter und ein dem Filter nachgeschalteter Netzspannungsgleichrichter GL1 angeschlossen. Der Filter reduziert die von der Schaltungsanordnung in das Stromnetz eingespeisten hochfrequenten Spannungskomponenten. An den Gleichspannungsausgang des Netzspannungsgleichrichters GL1 ist ein Hochsetzsteller HS1 angeschlossen, der eine sinusförmige Stromentnahme aus dem Stromnetz gewährleistet. Parallel zum Ausgang des Hochsetzstellers HS1 ist ein Zwischenkreiskondensator C10 geschaltet, an dem die Versorgungsspannung für den nachgeschalteten Halbbrückenwechselrichter HW1 bereitgestellt wird. Die Ansteuerung der Schalttransistoren des Halbbrückenwechselrichters HW1 und auch des Hochsetzstellers HS1 erfolgt mit Hilfe des Integrierten Schaltkreises IC1, der seine Versorgungsspannung über den Spannungsversorgungsanschluß J14 und einen weiteren, auf Masse liegenden Anschluß j15 erhält. An den Halbbrückenwechselrichter HW1 ist ein als Resonanzkreis ausgebildeter Lastkreis angeschlossen, der die Resonanzinduktivität L10, die Kondensatoren C11, C12 und die elektrischen Anschlüsse j12, j13 aufweist. Die elektrischen Anschlüsse j12, j13 sind parallel zu den Kondensatoren C11, C12 geschaltet und dienen zum Anschluß der elektrodenlosen Entladungslampe LP1, das heißt, zum Anschluß mindestens einer Induktionsspule L11 der elektrodenlosen Entladungslampe LP1. Jeweils ein Anschluß der Kondensatoren C10, C11, C12 ist an den auf Masse liegenden Verzweigungspunkt V11 angeschlossen. Der Kondensator C12 entkoppelt den Anschluß j13 gleichstrommäßig von dem Masse-Anschluß V11.

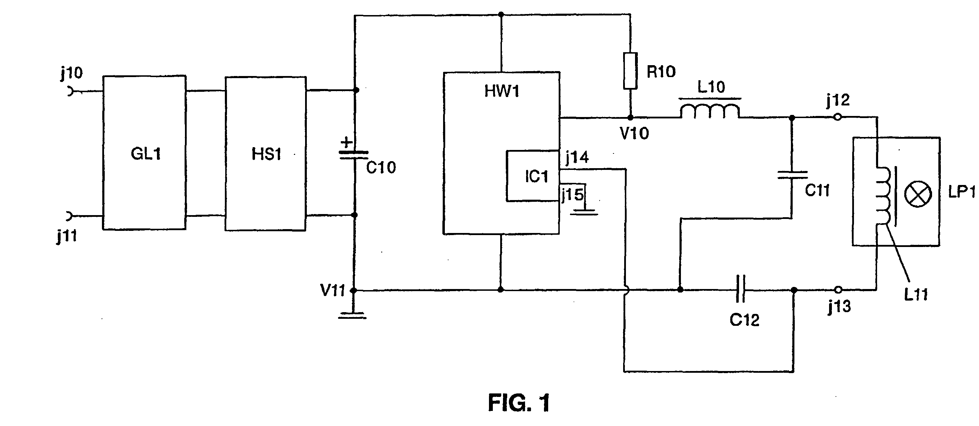

Das in der Figur 1 abgebildete erste Ausführungsbeispiel weist außerdem einen ohmschen Widerstand R10 auf, der einerseits mit dem positiven Pol des Zwischenkreiskondensators C10 und andererseits mit dem Abgriff V10 im Lastkreis verbunden ist. Der Versorgungsstrom für den Integrierten Schaltkreis IC1 fließt, ausgehend vom positiven Pol des Zwischenkreiskondensators C10, über den Widerstand R10, die Resonanzinduktivität L10, den elektrischen Anschluß j12, die mindestens eine Induktionsspule L11 der elektrodenlosen Entladungslampe LP1 und den elektrischen Anschluß j13 zum positiven Spannungsversorgungsanschluß j14 des Integrierten Schaltkreises IC1.

Bei fehlender Lampe LP1, das heißt, bei nicht angeschlossener Induktionsspule L11 ist der Gleichstrompfad zwischen den Anschlüssen j12, j13 unterbrochen. Dann erhält der Integrierte Schaltkreis IC1, trotz am Spannungseingang j10, j11 anliegender Netzspannung, keine Versorgungsspannung. Dadurch können weder der Halbbrückenwechselrichter HW1 noch der Hochsetzsteller HS1 ihren Betrieb aufnehmen. Das Anschwingen des Halbbrückenwechselrichters HW1 und des Hochsetzstellers HS1 erfolgt erst, nachdem zuvor der Gleichstrompfad durch Anschließen der mindestens einen Induktionsspule L11 der Lampe LP1 an den Anschlüssen j12, j13 geschlossen wurde. Besitzt die elektrodenlose Entladungslampe LP1 mehrere Induktionsspulen L11, beispielsweise zwei, so werden diese Induktionsspulen ebenfalls an die Anschlüsse j12, j13 angeschlossen, derart daß sie parallel zur Induktionsspule L11 geschaltet sind.

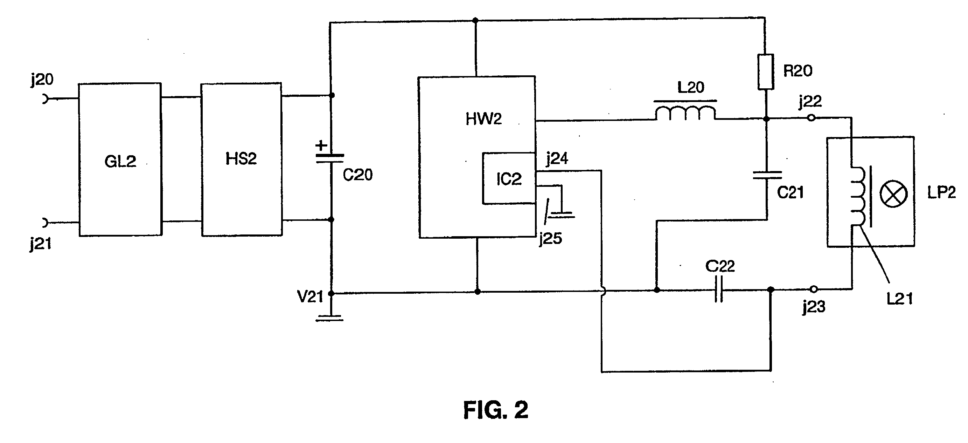

In Figur 2 ist das zweite Ausführungsbeispiel der erfindungsgemäßen Schaltungsanordnung in schematischer Darstellung abgebildet. Die Schaltungsanordnung gemäß des zweiten Ausführungsbeispiels besitzt einen Netzspannungseingang mit den Netzspannungsanschlüssen j20, j21, ein Filter und einen Netzspannungsgleichrichter GL2, einen nachgeschalteten Hochsetzsteller HS2, einen an den Ausgang des Hochsetzstellers HS2 angeschlossenen Zwischenkreiskondensator C20, der die Versorgungsspannung für einen Halbbrückenwechselrichter HW2 liefert. Dem Halbbrückenwechselrichter HW2 ist ein als Resonanzkreis ausgebildeter Lastkreis nachgeschaltet, der die Resonanzinduktivität L20, die Kondensatoren C21, C22 und zwei elektrische Anschlüsse j22, j23 für eine elektrodenlose Entladungslampe LP2 aufweist. Die Ansteuerung des Halbbrückenwechselrichters HW2 erfolgt mit Hilfe eines Integrierten Schaltkreises IC2, der auch die Ansteuerungsimpulse für den Hochsetzsteller HS2 erzeugt. Dem Integrierten Schaltkreis IC2 wird über den auf Masse liegenden Anschluß j25 und den weiteren Anschluß j24 seine Versorgungsspannung zugeführt. Außerdem besitzt die Schaltungsanordnung einen ohmschen Widerstand R20, der einerseits an den positiven Pol des Zwischenkreiskondensators C20 und andererseits an einen Abgriff zwischen der Resonanzinduktivität L20 und dem elektrischen Anschluß j22 im Lastkreis angeschlossen ist. Der Versorgungsstrom für den Integrierten Schaltkreis IC2 fließt, ausgehend vom postiven Pol des Zwischenkreiskondensators C20, über den Widerstand R20, den elektrischen Anschluß j22, die mindestens eine Induktionsspule L21 der elektrodenlosen Entladungslampe LP2 und den elektrischen Anschluß j23 zum positiven Spannungsversorgungsanschluß j24 des Integrierten Schaltkreises IC2. Der Kondensator C22 entkoppelt den Anschluß j23 gleichstrommäßig von dem Masse-Anschluß V21.

Bei fehlender Lampe LP2, das heißt, bei nicht angeschlossener Induktionsspule L21 ist der Gleichstrompfad zwischen den Anschlüssen j22, j23 unterbrochen. Dann erhält der Integrierte Schaltkreis IC2, trotz am Spannungseingang j20, j21 anliegender Netzspannung, keine Versorgungsspannung. Dadurch können weder der Halbbrückenwechselrichter HW2 noch der Hochsetzsteller HS2 ihren Betrieb aufnehmen. Die Schaltungsanordnung dieses zweiten Ausführungsbeispiels unterscheidet sich von der des ersten Ausführungsbeispiels nur dadurch, daß die Resonanzinduktivität L20 des zweiten Ausführungsbeispiels, im Gegensatz zu der des ersten Ausführungsbeispiels, nicht in den Gleichstrompfad geschaltet ist.

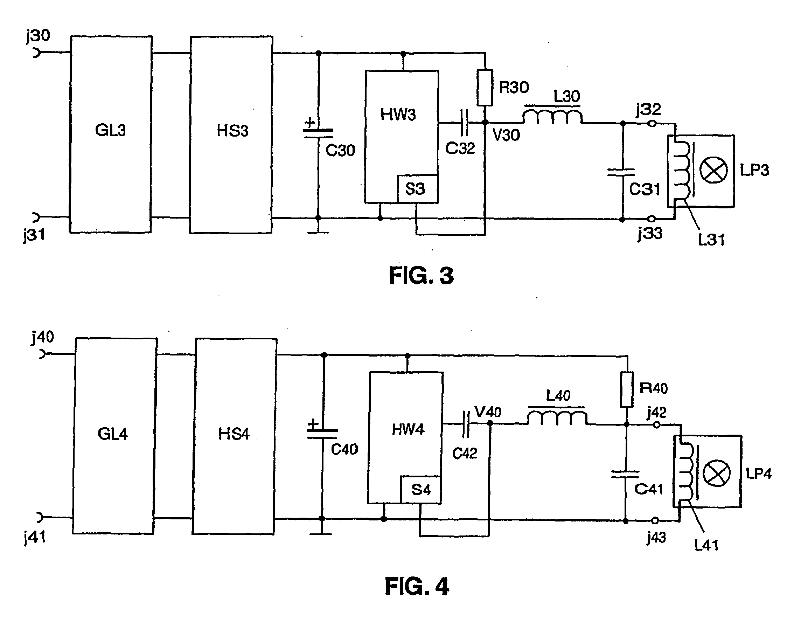

Das in Figur 3 abgebildete dritte Ausführungsbeispiel der Erfindung besitzt einen Netzspannungseingang mit den Netzspannungsanschlüssen j30, j31, ein Filter und einen Netzspannungsgleichrichter GL3, einen nachgeschalteten Hochsetzsteller HS3, einen an den Ausgang des Hochsetzstellers HS3 angeschlossenen Zwischenkreiskondensator C30, der die Versorgungsspannung für einen Wechselrichter HW3 liefert. Dem Wechselrichter HW3 ist ein als Resonanzkreis ausgebildeter Lastkreis nachgeschaltet, der die Resonanzinduktivität L30, die Kondensatoren C31, C32 und zwei elektrische Anschlüsse j32, j33 für die wenigstens eine Induktionsspule L31 einer elektrodenlose Entladungslampe LP3 aufweist. Die Ansteuerung des Wechselrichters HW3 erfolgt mit Hilfe einer Steuerschaltung S3. Der Zündkondensator C31 ist parallel zu den Anschlüssen j32, j33 geschaltet. Ein Anschluß des Symmetriekondensators C32 ist an den Wechselrichter HW3 angeschlossen, während der andere Anschluß des Symmetriekondensators C32 über den Abgriff V30 mit der Resonanzinduktivität L30 verbunden ist. Zusätzlich weist diese Schaltungsanordnung einen ohmschen Widerstand R30 auf, der einerseits mit dem positiven Pol des Zwischenkreiskondensators C30 und andererseits mit dem Abgriff V30 im Lastkreis verbunden ist. Der Abgriff V30 ist ferner mit einem Eingang der Steuerschaltung S3 verbunden. Die Steuerschaltung S3 besitzt ein vorgeschaltetes oder in die Steuerschaltung integriertes Überwachungsglied, beispielsweise eine Logische Schaltung, die das elektrische Potential am Abgriff V30 überwacht und ein entsprechendes Auswertungssignal an die Steuereinheit S3 weiterleitet. Falls an den Anschlüssen j32, j33 keine Lampe LP3 angeschlossen ist, so befindet sich der Abgriff V30 auf einem vergleichsweise hohen elektrischen Potential, das im wesentlichen durch den Ladezustand des Zwischenkreiskondensators C30 bestimmt wird. Ist hingegen an den Anschlüssen j32, j33 mindestens eine Lampe LP3 angeschlossen, so ist der Abgriff V30 über die Resonanzinduktivität L30 und die Induktionsspule L31 mit Masse verbunden und der Abgriff V30 befindet sich daher auf einem vergleichsweise niedrigen elektrischen Potential. Das Überwachungsglied generiert ein dem elektrischen Potential am Abgriff V30 entsprechendes digitales oder analoges Auswertungssignal und führt dieses der Steuerschaltung S3 zu. Die Steuerschaltung S3 ist derart ausgebildet, daß sie das Anschwingen des Wechselrichters HW3 erst dann ermöglicht, wenn das elektrische Potential am Abgriff V30 einen vorbestimmten, durch die Dimensionierung der Schaltungsbauteile vorgegebenen Wert unterschreitet. Auf diese Weise wird gewährleistet, daß bei fehlender Lampe LP3 keine Zündversuche erfolgen.

Das in Figur 4 abgebildete vierte Ausführungsbeispiel der Erfindung besitzt einen Netzspannungseingang mit den Netzspannungsanschlüssen j40, j41, ein Filter und einen Netzspannungsgleichrichter GL4, einen nachgeschalteten Hochsetzsteller HS4, einen an den Ausgang des Hochsetzstellers HS4 angeschlossenen Zwischenkreiskondensator C40, der die Versorgungsspannung für einen Wechselrichter HW4 liefert. Dem Wechselrichter HW4 ist ein als Resonanzkreis ausgebildeter Lastkreis nachgeschaltet, der die Resonanzinduktivität L40, die Kondensatoren C41, C42 und zwei elektrische Anschlüsse j42, j43 für die wenigstens eine Induktionsspule L41 einer elektrodenlose Entladungslampe LP4 aufweist. Die Ansteuerung des Wechselrichters HW4 erfolgt mit Hilfe einer Steuerschaltung S4. Der Zündkondensator C41 ist parallel zu den Anschlüssen j42, j43 geschaltet. Ein Anschluß des Symmetriekondensators C42 ist an den Wechselrichter HW4 angeschlossen, während der andere Anschluß des Symmetriekondensators C42 über den Abgriff V40 mit der Resonanzinduktivität L40 verbunden ist. Der Abgriff V40 ist ferner mit einem Eingang der Steuerschaltung S4 verbunden. Zusätzlich weist diese Schaltungsanordnung einen ohmschen Widerstand R40 auf, der einerseits mit dem positiven Pol des Zwischenkreiskondensators C40 und andererseits mit einem Abgriff zwischen der Resonanzinduktivität L40 und dem Anschluß j42 im Lastkreis verbunden ist. Die Steuerschaltung S4 überwacht das elektrische Potential am Abgriff V40. Falls an den Anschlüssen j42, j43 keine Lampe LP4 angeschlossen ist, so befindet sich der Abgriff V40 auf einem vergleichsweise hohen elektrischen Potential, das im wesentlichen durch den Ladezustand des Zwischenkreiskondensators C40 bestimmt wird. Ist hingegen an den Anschlüssen j42, j43 mindestens eine Lampe LP4 angeschlossen, so ist der Abgriff V40 über die Induktionsspule L41 mit Masse verbunden und der Abgriff V40 befindet sich daher auf einem vergleichsweise niedrigen elektrischen Potential. Die Steuerschaltung S4 besitzt ein vorgeschaltetes oder in die Steuerschaltung integriertes Überwachungsglied, beispielsweise eine Logische Schaltung, die das elektrische Potential am Abgriff V40 überwacht und ein entsprechendes digitales oder analoges Auswertungssignal generiert und der Steuereinheit S4 zuführt. Die Steuerschaltung S4 ist derart ausgebildet, daß sie das Anschwingen des Wechselrichters HW4 erst dann ermöglicht, wenn das elektrische Potential am Abgriff V40 einen vorbestimmten, durch die Dimensionierung der Schaltungsbauteile vorgegebenen Wert unterschreitet. Auf diese Weise wird gewährleistet, daß bei fehlender Lampe LP4 keine Zündversuche erfolgen.

Die Erfindung beschränkt sich nicht auf die oben näher erläuterten Ausführungsbeispiele. Beispielsweise ist es möglich, die Erfindung nicht nur auf fremdgesteuerte Halbbrückenwechselrichter anzuwenden, sondern sie kann auch auf andere Spannungswandler wie zum Beispiel Vollbrückenwechselrichter oder freischwingende Halbbrückenwechselrichter angewendet werden.

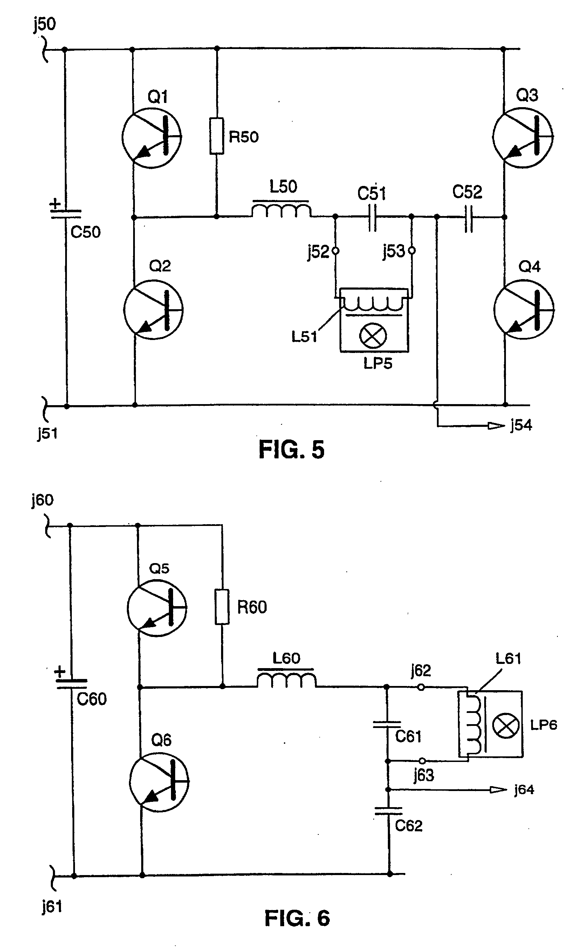

Die in Figur 5 abgebildete Schaltungsanordnung des fünften Ausführungsbeispiels zeigt die Anwendung der Erfindung auf einen Vollbrückenwechselrichter. Die Schaltungsanordnung gemäß des fünften Ausführungsbeispiels besitzt, ähnlich wie beim ersten Ausführungsbeispiel beschrieben, einen Netzspannungsanschluß, ein Filter und einen Netzspannungsgleichrichter sowie einen Hochsetzsteller, die in Figur 5 nicht abgebildet sind. Die in Figur 5 gezeigten Anschlüsse j50, j51 sind an den Ausgang des Hochsetzstellers angeschlossen, so daß der Zwischenkreiskondensator C50 parallel zum Ausgang des Hochsetzstellers geschaltet ist. Dem Zwischenkreiskondensator C50 ist ein aus den Schalttransistoren Q1, Q2, Q3, Q4 und einer Steuerschaltung (nicht abgebildet) bestehender Vollbrückenwechselrichter nachgeschaltet. In dem Brückenzweig des Vollbrückenwechselrichters Q1, Q2, Q3, Q4 sind eine Resonanzinduktivität L50, ein Zündkondensator C51 und ein Symmetriekondensator C52 angeordnet. Parallel zum Zündkondensator C51 sind zwei elektrische Anschlüsse j52, j53 geschaltet, die zum Anschluß wenigstens einer Induktionsspule L51 einer elektrodenlosen Entladungslampe LP5 dienen. Ferner weist die Schaltungsanordnung einen ohmschen Widerstand R50 auf, der einerseits mit dem positiven Pol des Zwischenkreiskondensators C50 und andererseits mit einem Abgriff im Brückenzweig verbunden ist, und eine Stromleitung j54, die die Steuerschaltung (nicht abgebildet) des Vollbrückenwechselrichters Q1, Q2, Q3, Q4 mit einem weiteren Abgriff im Brükkenzweig verbindet. Auf diese Weise entsteht ein Gleichstrompfad, in den, ausgehend vom positiven Pol des Zwischenkreiskondensators C50, der ohmsche Widerstand R50, die Resonanzinduktivität L50, der Anschluß j52, die Induktionsspule L51 der Entladungslampe LP5, der Anschluß j53 und die Stromleitung j54 geschaltet sind. Bei fehlender Entladungslampe LP5 ist dieser Gleichstrompfad unterbrochen. Dann erhält die Steuerschaltung, die beispielsweise ähnlich wie beim ersten Ausführungsbeispiel als Integrierter Schaltkreis ausgebildet sein kann, keine Versorgungsspannung und der Vollbrückenwechselrichter Q1, Q2, Q3, Q4 kann nicht anschwingen. Die Schaltungsanordnung unternimmt daher bei fehlender Entladungslampe LP5 keine Zündversuche.

Die Figur 6 zeigt die Anwendung der Erfindung auf einen freischwingenden Halbbrückenwechselrichter gemäß eines sechsten Ausführungsbeispiels. Diese Schaltungsanordnung besitzt , ähnlich wie beim ersten Ausführungsbeispiel beschrieben, einen Netzspannungsanschluß, ein Filter und einen Netzspannungsgleichrichter sowie einen Hochsetzsteller, die in Figur 6 nicht abgebildet sind. Die in Figur gezeigten Anschlüsse j60, j61 sind an den Ausgang des Hochsetzstellers angeschlossen, so daß der Zwischenkreiskondensator C60 parallel zum Ausgang des Hochsetzstellers geschaltet ist. Dem Zwischenkreiskondensator C60 ist ein von den beiden Schalttransistoren Q5, Q6 gebildeter Halbbrückenwechselrichter nachgeschaltet. An den Mittenabgriff zwischen den beiden Schalttransistoren Q5, Q6 ist ein als Resonanzkreis ausgebildeter Lastkreis angeschlossen, der eine Resonanzinduktivität L60, einen Zündkondensator C61, einen Symmetriekondensator C62 und zwei parallel zum Zündkondensator C61 angeordnete elektrische Anschlüsse j62, j63 für wenigstens eine Induktionsspule L61 einer elektrodenlosen Entladungslampe LP6 aufweist. Außerdem besitzt diese Schaltungsanordnung einen ohmschen Widerstand R60, der einerseits an den positiven Pol des Zwischenkreiskondensators C60 und andererseits an einen Abgriff im Lastkreis, beispielsweise an den Mittenabgriff zwischen den beiden Schalttransistoren Q5, Q6 angeschlossen ist, und eine Stromleitung j64, die einen zweiten, zwischen dem Anschluß j63 und dem Symmetriekondensator gelegenen Abgriff im Lastkreis mit einem Eingang der Steuerschaltung (nicht abgebildet) des Halbbrückenwechselrichters Q5, Q6 verbindet. Die Steuerschaltung des Halbbrückenwechselrichters Q5, Q6 umfaßt einen Transformator (nicht abgebildet) mit einer in den Lastkreis des Halbbrückenwechselrichters geschalteten Primärwicklung und zwei Sekundärwicklungen, die jeweils an die Steuerelektrode einer der beiden Schalttransistoren Q5, Q6 angeschlossen sind, sowie eine Startschaltung, die mit Hilfe eines Diacs Triggerimpulse für die Steuerelektrode des Schalttransistors Q6 erzeugt, um das Anschwingen des Halbbrückenwechselrichters zu ermöglichen. Ein derartiger freischwingender Halbbrückenwechselrichter mit einer solchen Steuerschaltung ist beispielsweise in der deutschen Patentanmeldung mit dem amtlichen Aktenzeichen 196 50110.5 beschrieben.

Die Stromleitung j64 ist mit dem Eingang der Startschaltung verbunden. Bei fehlender Entladungslampe LP6 wird der Symmetriekondensator C62 wegen seiner im Vergleich zum Zündkondensator C61 sehr großen Kapazität nur unzureichend aufgeladen und der Spannungsabfall am Symmetriekondensator C62 ist deshalb vergleichsweise gering. Daher wird die Startschaltung über die Stromleitung j64 bei fehlender Entladungslampe LP6 nur unzureichend mit Spannung versorgt, so daß ein Anschwingen des Halbbrückenwechselrichters nicht möglich ist.

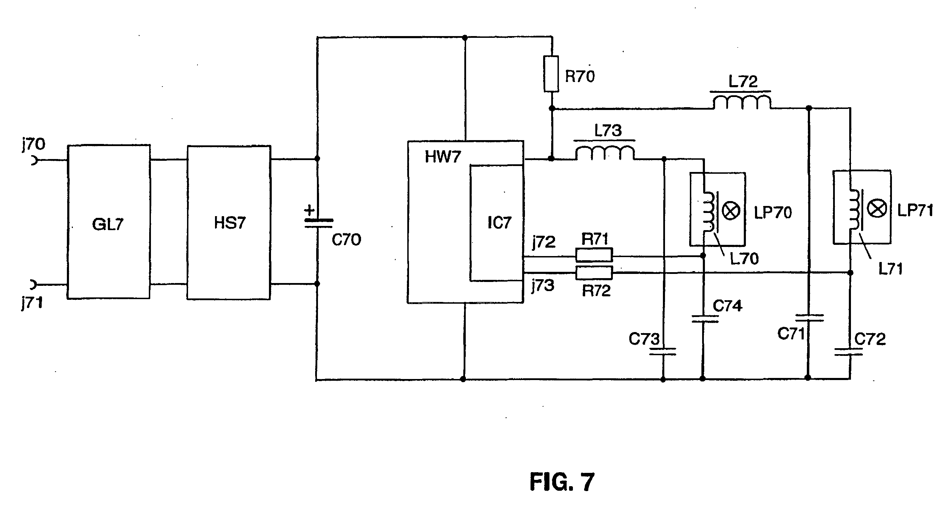

Die Figuren 7 bis 13 zeigen Ausführungsbeispiele für Schaltungsanordnungen zum Betrieb von jeweils zwei elektrodenlosen Entladungslampen.

Die in Figur 7 abgebildete Schaltungsanordnung gemäß des siebten Ausführungsbeispiels weist einen Netzspannungseingang j70, j71, eine an den Netzspannungseingang angeschlossene Filterschaltung mit nachgeschaltetem Netzspannungsgleichrichter GL7, einen an den Gleichspannungsausgang des Gleichrichters GL7 angeschlossenen Hochsetzsteller HS7, einen parallel zum Ausgang des Hochsetzstellers HS7 angeordneten Zwischenkreiskondensator C70 und einen fremdgesteuerten Halbbrückenwechselrichter HW7, dessen Eingang parallel zum Zwischenkreiskondensator C70 geschaltet ist, auf. Die Ansteuerung des Halbbrückenwechselrichters HW7 erfolgt mittels eines Integrierten Schaltkreises IC7, der seine Versorgungsspannung über seine Anschlüsse j72 und j73 und die Widerstände R70, R71 und R72 erhält. An den Halbbrückenwechselrichter HW7 sind zwei parallel geschaltete, als Resonanzkreise ausgebildete Lastkreise angeschlossen, die jeweils eine Resonanzinduktivität L72 bzw. L73, einen Resonanzkondensator C71 bzw. C73 sowie einen weiteren Kondensator C72 bzw. C74 und eine elektrodenlose Entladungslampe LP70 bzw. LP71 aufweisen. Der Versorgungsstrom für den Integrierten Schaltkreis IC7 fließt über beide Resonanzinduktivitäten L72, L73 und über die Induktionsspulen L71 und L72 der beiden elektrodenlosen Entladungslampen LP70, LP71. Fehlt eine der Entladungslampen LP70 oder LP71, so wird der Integrierte Schaltkreis IC7 nicht mit Spannung versorgt und der Halbbrückenwechselrichter HW7 kann nicht anschwingen.

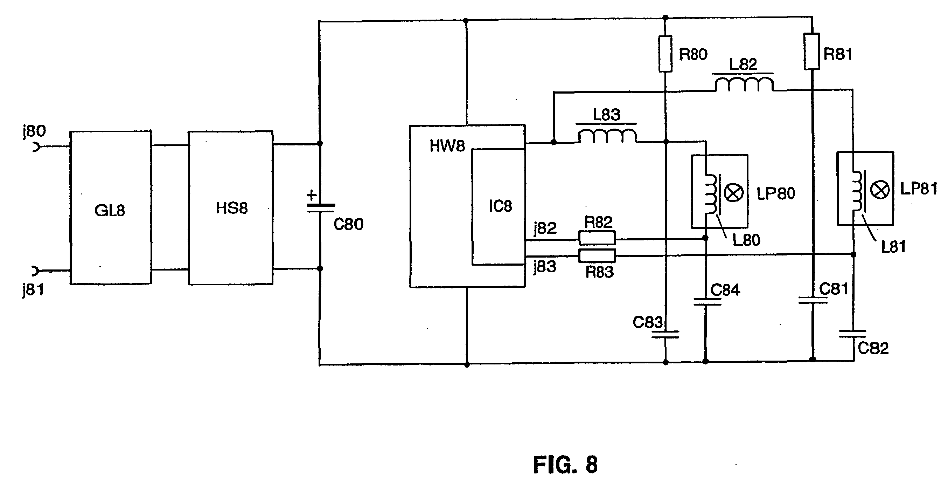

Das in Figur 8 abgebildete achte Ausführungsbeispiel besitzt einen Netzspannungseingang j80, j81, eine an den Netzspannungseingang angeschlossene Filterschaltung mit nachgeschaltetem Netzspannungsgleichrichter GL8, einen an den Gleichspannungsausgang des Gleichrichters GL8 angeschlossenen Hochsetzsteller HS8, einen parallel zum Ausgang des Hochsetzstellers HS8 angeordneten Zwischenkreiskondensator C80 und einen fremdgesteuerten Halbbrückenwechselrichter HW8, dessen Eingang parallel zum Zwischenkreiskondensator C80 geschaltet ist, auf. Die Ansteuerung des Halbbrückenwechselrichters HW8 erfolgt mittels eines Integrierten Schaltkreises IC8, der seine Versorgungsspannung über seine Anschlüsse j82 und j83 und die Widerstände R80, R81, R82 und R83 erhält. An den Halbbrückenwechselrichter HW8 sind zwei parallel geschaltete, als Resonanzkreise ausgebildete Lastkreise angeschlossen, die jeweils eine Resonanzinduktivität L82 bzw. L83, einen Resonanzkondensator C81 bzw. C83 sowie einen weiteren Kondensator C82 bzw. C84 und eine elektrodenlose Entladungslampe LP80 bzw. LP81 aufweisen. Der Versorgungsstrom für den Integrierten Schaltkreis IC8 fließt hier, nicht über die beiden Resonanzinduktivitäten L82, L83 wie beim siebten Ausführungsbeispiel, sondern nur über die Induktionsspulen L81 und L82 der beiden elektrodenlosen Entladungslampen LP80, LP81. Fehlt eine der Entladungslampen LP80 oder LP81, so wird der Integrierte Schaltkreis IC8 nicht mit Spannung versorgt und der Halbbrückenwechselrichter HW8 kann nicht anschwingen.

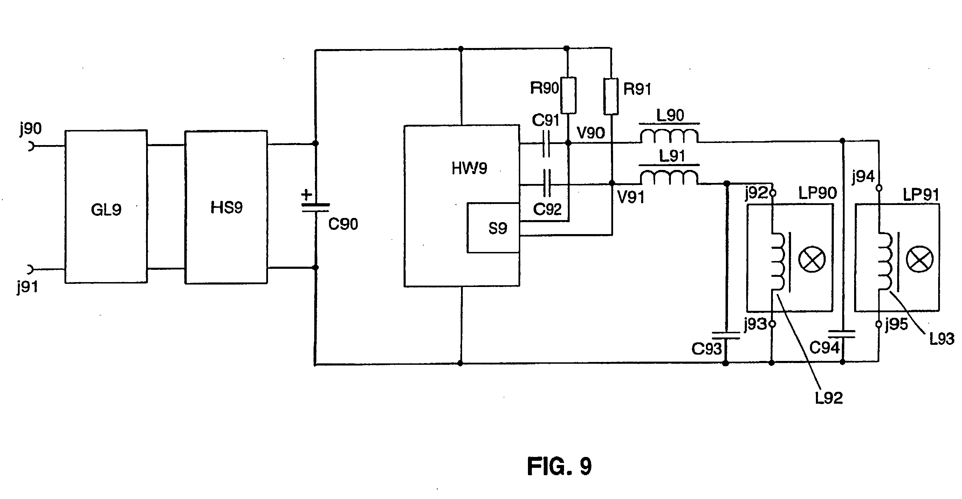

Das in Figur 9 abgebildete neunte Ausführungsbeispiel der Erfindung besitzt einen Netzspannungseingang mit den Netzspannungsanschlüssen j90, j91, ein Filter und einen Netzspannungsgleichrichter GL9, einen nachgeschalteten Hochsetzsteller HS9, einen an den Ausgang des Hochsetzstellers HS9 angeschlossenen Zwischenkreiskondensator C90, der die Versorgungsspannung für einen Wechselrichter HW9 liefert. An den Wechselrichter HW9 sind zwei parallel geschaltete, als Resonanzkreise ausgebildete Lastkreise angeschlossen, die jeweils eine Resonanzinduktivität L90 bzw. L91, Kondensatoren C91, C92 bzw. C93, C94 und zwei elektrische Anschlüsse j92, j93 bzw. j94, j95 für die wenigstens eine Induktionsspule L92 bzw. L93 einer elektrodenlose Entladungslampe LP90 bzw. LP91 aufweisen. Die Ansteuerung des Wechselrichters HW9 erfolgt mit Hilfe einer Steuerschaltung S9. Die Zündkondensatoren C93 bzw. C94 sind parallel zu den jeweiligen Anschlüssen j92, j93 bzw. j94, j95 geschaltet. Ein Anschluß der Symmetriekondensatoren C91 bzw. C92 ist jeweils an den Wechselrichter HW9 angeschlossen, während ihr anderer Anschluß über den Abgriff V90 bzw. V91 mit der Resonanzinduktivität L90 bzw. L91 verbunden ist. Zusätzlich weist diese Schaltungsanordnung zwei ohmschen Widerstände R90, R91 auf, die jeweils einerseits mit dem positiven Pol des Zwischenkreiskondensators C90 und andererseits mit dem Abgriff V90 bzw. V91 in dem jeweiligen Lastkreis verbunden sind. Die Abgriffe V90, V91 sind ferner jeweils mit einem Eingang der Steuerschaltung S9 verbunden. Die Steuerschaltung S9 besitzt ein vorgeschaltetes oder in die Steuerschaltung integriertes Überwachungsglied, beispielsweise eine Logische Schaltung, die das elektrische Potential an den AbgriffenV90 und V91 überwacht und ein entsprechendes Auswertungssignal an die Steuereinheit S9 weiterleitet. Falls an den Anschlüssen j92, j93 oder j94, j95 keine Lampe LP90, LP91 angeschlossen ist, so befindet sich der Abgriff V90 bzw. V91 auf einem vergleichsweise hohen elektrischen Potential, das im wesentlichen durch den Ladezustand des Zwischenkreiskondensators C90 bestimmt wird. Ist hingegen an den Anschlüssen j92, j93 bzw. j94, j95 eine Lampe LP90 bzw. LP91 angeschlossen, so ist der Abgriff V90 bzw. V91 über die jeweilige Resonanzinduktivität L90 bzw. L91 und die entsprechende Induktionsspule L92 bzw. L93 mit Masse verbunden und der Abgriff V90 bzw. V91 befindet sich daher auf einem vergleichsweise niedrigen elektrischen Potential. Das Überwachungsglied generiert ein dem elektrischen Potential am Abgriff V90 bzw. V91 entsprechendes digitales oder analoges Auswertungssignal und führt dieses der Steuerschaltung S9 zu. Die Steuerschaltung S9 ist derart ausgebildet, daß sie das Anschwingen des Wechselrichters HW9 erst dann ermöglicht, wenn das elektrische Potential an den Abgriffen V90 und V91 einen vorbestimmten, durch die Dimensionierung der Schaltungsbauteile vorgegebenen Wert unterschreitet. Auf diese Weise wird gewährleistet, daß bei fehlender Lampe LP90 oder LP91 keine Zündversuche erfolgen.

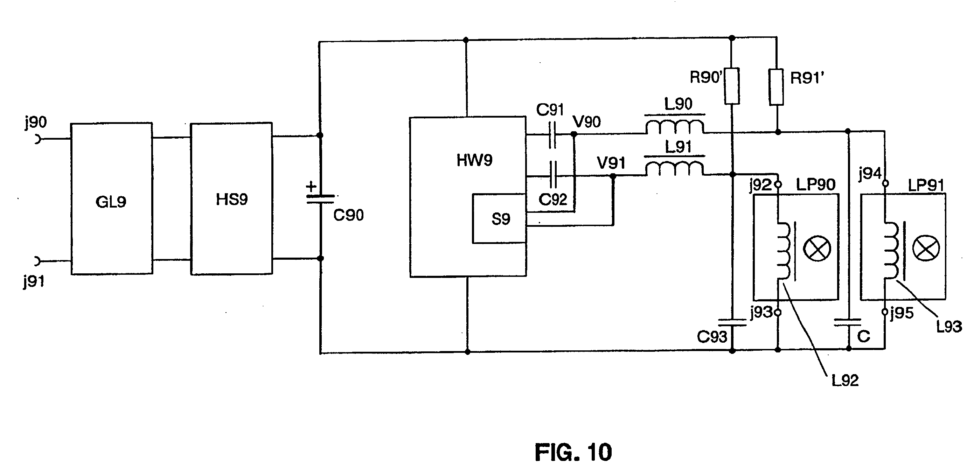

Das in Figur 10 abgebildete zehnte Ausführungsbeispiel stimmt weitgehend mit dem neunten Ausführungsbeispiel überein. Die Funktionsweise der Schaltungsanordnungen dieser beiden Ausführungsbeispiele ist identisch. Es wurden lediglich die Widerstände R90, R91 durch die gleichwirkenden Widerstände R90' und R91', die einerseits mit dem positiven Anschluß des Zwischenkreiskondensators C90 und andererseits mit einem zwischen der Resonanzinduktivität und der Lampe im jeweiligen Lastkreis angeordneten Abgriff verbunden sind, ersetzt. Alle anderen Bauteile stimmen überein. Deshalb wurden in den Figuren 9 und 10 für identische Bauteile dieselben Bezugszeichen verwendet.

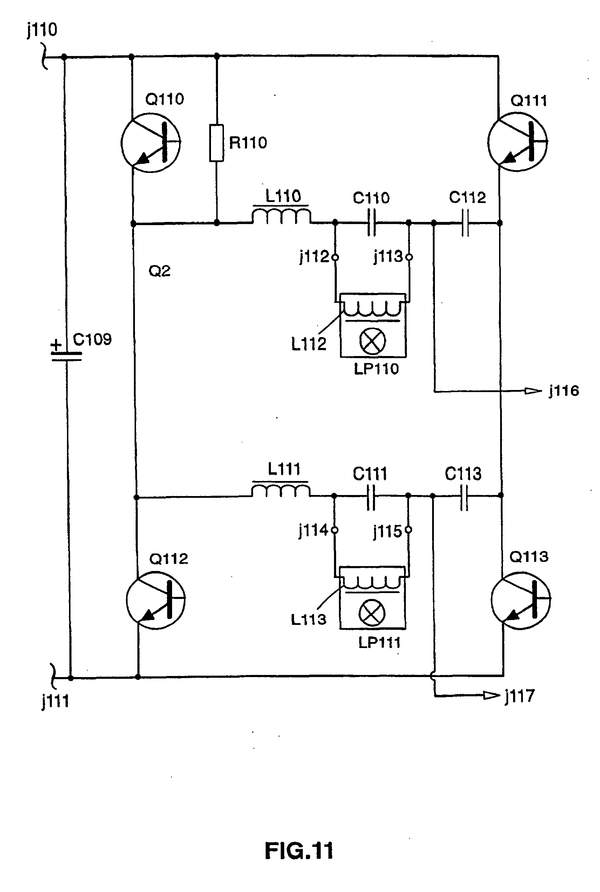

Die in Figur 11 abgebildete Schaltungsanordnung des elften Ausführungsbeispiels zeigt die Anwendung der Erfindung auf einen Vollbrückenwechselrichter zum Betrieb von zwei parallel geschalteten elektrodenlosen Entladungslampen LP110, LP111. Die Schaltungsanordnung gemäß dieses Ausführungsbeispiels besitzt, ähnlich wie beim ersten Ausführungsbeispiel beschrieben, einen Netzspannungsanschluß, ein Filter und einen Netzspannungsgleichrichter sowie einen Hochsetzsteller, die in Figur 11 nicht abgebildet sind. Die in Figur 11 gezeigten Anschlüsse j110, j111 sind an den Ausgang des Hochsetzstellers angeschlossen, so daß der Zwischenkreiskondensator C109 parallel zum Ausgang des Hochsetzstellers geschaltet ist. Dem Zwischenkreiskondensator C109 ist ein aus den Schalttransistoren Q110, Q111, Q112, Q113 und einer Steuerschaltung (nicht abgebildet) bestehender Vollbrückenwechselrichter nachgeschaltet. In dem Brückenzweig des Vollbrückenwechselrichters Q110, Q111, Q112, Q113 sind zwei parallel geschaltete Resonanzkreise angeordnet, die jeweils eine Resonanzinduktivität L110 bzw. L111, einen Zündkondensator C110 bzw. C111 und einen Symmetriekondensator C112 bzw. C113 besitzen. Parallel zum jeweiligen Zündkondensator C110 bzw. C111 sind jeweils zwei elektrische Anschlüsse j112, j113 bzw. j114, 115 geschaltet, die zum Anschluß wenigstens einer Induktionsspule L112 bzw. L113 einer elektrodenlosen Entladungslampe LP110 bzw. LP111 dienen. Ferner weist die Schaltungsanordnung einen ohmschen Widerstand R110 auf, der parallel zur Schaltstrecke des Transistors Q 110 angeordnet ist, und zwei Stromleitungen j116, 117, die die Steuerschaltung (nicht abgebildet) des Vollbrückenwechselrichters Q110, Q111, Q112, Q113 mit jeweils einem Abgriff in jeweils einem der Brückenzweige verbinden. Auf diese Weise entstehen zwei Gleichstrompfade, in die, jeweils ausgehend vom positiven Pol des Zwischenkreiskondensators C109, der ohmsche Widerstand R110, die erste Resonanzinduktivität L110, der Anschluß j112, die Induktionsspule L112 der ersten Entladungslampe LP110, der Anschluß j113 und die erste Stromleitung j116 bzw. der ohmsche Widerstand R110, die zweite Resonanzinduktivität L111, der Anschluß j114, die Induktionsspule L113 der zweiten Entladungslampe LP111, der Anschluß j115 und die zweite Stromleitung j117 geschaltet sind. Fehlt eine der Entladungslampen LP110 bzw. 111, so ist einer dieser Gleichstrompfade unterbrochen. Dann erhält die Steuerschaltung, die beispielsweise ähnlich wie beim siebten Ausführungsbeispiel als Integrierter Schaltkreis ausgebildet sein kann, keine Versorgungsspannung und der Vollbrückenwechselrichter kann nicht anschwingen. Die Schaltungsanordnung unternimmt dann keine Zündversuche.

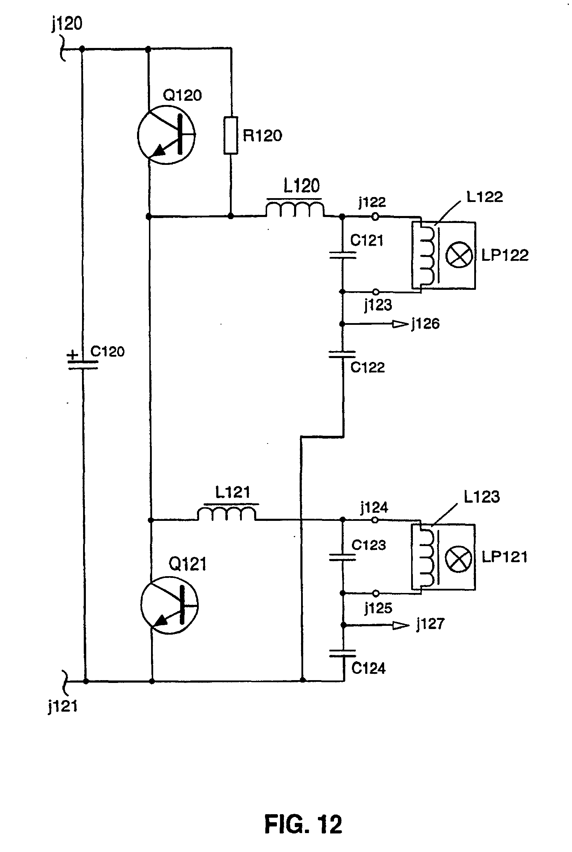

Die Figur 12 zeigt, gemäß des zwölften Ausführungsbeispiels, die Anwendung der Erfindung auf einen freischwingenden Halbbrückenwechselrichter zum Betrieb von zwei parallel geschalteten elektrodenlosen Entladungslampen. Diese Schaltungsanordnung besitzt, ähnlich wie beim ersten Ausführungsbeispiel beschrieben, einen Netzspannungsanschluß, ein Filter und einen Netzspannungsgleichrichter sowie einen Hochsetzsteller, die in Figur 12 nicht abgebildet sind. Die in Figur 12 gezeigten Anschlüsse j120, j121 sind an den Ausgang des Hochsetzstellers angeschlossen, so daß der Zwischenkreiskondensator C120 parallel zum Ausgang des Hochsetzstellers geschaltet ist. Dem Zwischenkreiskondensator C120 ist ein von den beiden Schalttransistoren Q120, Q121 gebildeter Halbbrückenwechselrichter nachgeschaltet. An den Mittenabgriff zwischen den beiden Schalttransistoren Q120, Q121 sind zwei parallel zueinander angeordnete, als Resonanzkreise ausgebildete Lastkreise angeschlossen, die jeweils eine Resonanzinduktivität L120 bzw. L121, einen Zündkondensator C121 bzw. C123, einen Symmetriekondensator C122 bzw. C124 und zwei parallel zum jeweiligen Zündkondensator C121 bzw. C123 angeordnete elektrische Anschlüsse j122, j123 bzw. j124, j125 für wenigstens eine Induktionsspule L122 bzw. L123 einer elektrodenlosen Entladungslampe LP122 bzw. LP121 aufweisen. Außerdem besitzt diese Schaltungsanordnung einen ohmschen Widerstand R120, der einerseits an den positiven Pol des Zwischenkreiskondensators C120 und andererseits an den Mittenabgriff zwischen den beiden Schalttransistoren Q120, Q121 angeschlossen ist, und zwei Stromleitungen j126, j127, die jeweils einen zwischen dem Anschluß j123 bzw. j125 und dem entsprechenden Symmetriekondensator C122 bzw. C124 gelegenen Abgriff im jeweiligen Lastkreis mit einem Eingang der Steuerschaltung (nicht abgebildet) des Halbbrückenwechselrichters Q120, Q121 verbinden. Die Steuerschaltung des Halbbrückenwechselrichters Q120, Q121 umfaßt einen Transformator (nicht abgebildet) mit einer in den Lastkreis des Halbbrückenwechselrichters geschalteten Primärwicklung und zwei Sekundärwicklungen, die jeweils an die Steuerelektrode einer der beiden Schalttransistoren Q120, Q121 angeschlossen sind, sowie eine Startschaltung, die mit Hilfe eines Diacs Triggerimpulse für die Steuerelektrode des Schalttransistors Q121 erzeugt, um das Anschwingen des Halbbrückenwechselrichters zu ermöglichen. Ein derartiger freischwingender Halbbrückenwechselrichter mit einer solchen Steuerschaltung ist beispielsweise in der deutschen Patentanmeldung mit dem amtlichen Aktenzeichen 196 50 110.5 beschrieben.

Die Stromleitungen j126, j127 sind, beispielsweise über eine UND-Schaltung, mit dem Eingang der Startschaltung verbunden. Fehlt eine der Entladungslampen LP122 oder LP121, so wird der entsprechende Symmetriekondensator C122 bzw. C124 wegen seiner im Vergleich zum Zündkondensator C121 bzw. C123 sehr großen Kapazität nur unzureichend aufgeladen und der Spannungsabfall am jeweiligen Symmetriekondensator C122 bzw. C124 ist deshalb vergleichsweise gering. Daher wird die Startschaltung über die Stromleitungen j126 und j127 bei Fehlen einer Entladungslampe LP121 bzw. LP122 nur unzureichend mit Spannung versorgt, so daß ein Anschwingen des Halbbrückenwechselrichters nicht möglich ist.

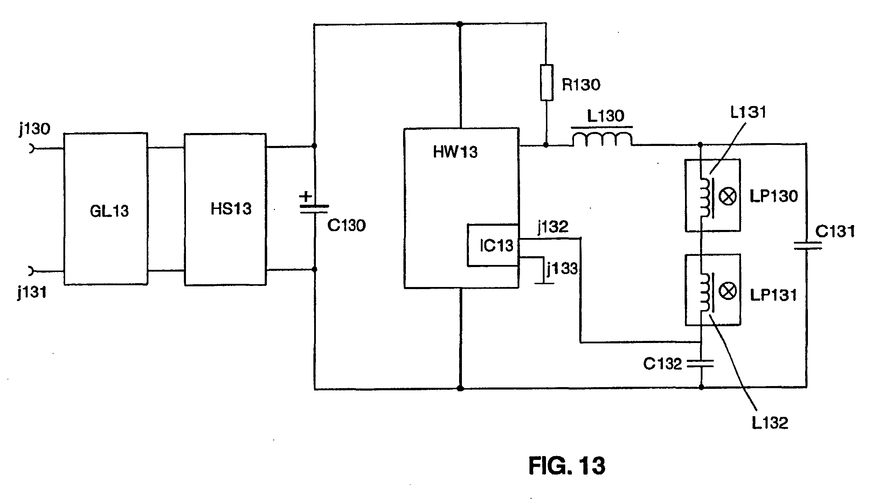

In Figur 13 ist eine Schaltungsanordnung gemäß des dreizehntes Ausführungsbeispiels der Erfindung abgebildet, die zum Betrieb von zwei in Serie geschalteten elektrodenlosen Entladungslampen dient. Die in Figur 13 abgebildete Schaltungsanordnung weist einen Netzspannungseingang j130, j131, eine an den Netzspannungseingang angeschlossene Filterschaltung mit nachgeschaltetem Netzspannungsgleichrichter GL13, einen an den Gleichspannungsausgang des Gleichrichters GL13 angeschlossenen Hochsetzsteller HS13, einen parallel zum Ausgang des Hochsetzstellers HS13 angeordneten Zwischenkreiskondensator C130 und einen fremdgesteuerten Halbbrückenwechselrichter HW13, dessen Eingang parallel zum Zwischenkreiskondensator C70 geschaltet ist, auf. Die Ansteuerung des Halbbrückenwechselrichters HW13 erfolgt mittels eines Integrierten Schaltkreises IC13, der seine Versorgungsspannung über seine Anschlüsse j132 und j133 erhält. Der Anschluß j133 liegt auf Masse-Potential, während der andere Anschluß über die in Serie geschalteten Induktionsspulen L131, L132 der elektrodenlosen Entladungslampen LP130 und LP131, die Resonanzinduktivität L130 und den ohmschen Widerstand R130 gleichstrommäßig an den positiven Anschluß des Zwischenkreiskondensators C130 angeschlossen ist. Fehlt eine der beiden Lampen LP130 oder LP131, so ist der vorgenannte Gleichstrompfad, der den Anschluß j132 mit dem positiven Anschluß des Zwischenkreiskondensators C130 verbindet, unterbrochen. In diesem Fall erhält der Integrierte Schaltkreis IC13 keine Versorgungsspannung und der Halbbrückenwechselrichter HW13 kann nicht anschwingen.

## Patentansprüche

1. Schaltungsanordnung zum Betrieb mindestens einer elektrodenlosen Entladungslampe (LP1) mit mindestens einem Spannungseingang (j10, j11) zur Spannungsversorgung der Schaltungsanordnung und elektrischen Anschlüssen (j12, j13) für mindestens eine elektrodenlose Entladungslampe (LP1), wobei
- die Schaltungsanordnung Kontrollmittel aufweist, die die Präsenz oder das Fehlen der mindestens einen elektrodenlosen Entladungslampe (LP1) an den elektrischen Anschlüssen feststellen (j12, j13) und die das Bereitstellen der Zünd- und/oder Betriebsspannung für die mindestens eine elektrodenlose Entladungslampe (LP1) erst dann ermöglichen, wenn die mindestens eine elektrodenlose Entladungslampe (LP1) an die elektrischen Anschlüsse (j12, j13) angeschlossen ist,
- die Kontrollmittel einen Strompfad (C10, R10, j12, j13, IC1) und einen Strom- oder Spannungsdetektor (IC1) aufweisen, wobei
- der Strompfad (C10, R10, j12, j 13, IC1) einen ersten elektrischen Widerstandswert besitzt, wenn die mindestens eine Entladungslampe (LP1) an die Schaltungsanordnung angeschlossen ist,
- der Strompfad (C10, R10, j12, j13, IC1) einen anderen elektrischen Widerstandswert besitzt, wenn keine Entladungslampe an die Schaltungsanordnung angeschlossen ist,
- der Strom- oder Spannungsdetektor (IC1) den Stromfluß oder den Spannungsabfall in dem Strompfad (C10, R10, j12, j13, IC1) überwacht,
**dadurch gekennzeichnet, dass** wenigstens eine Induktionsspule (L11) der mindestens einen elektrodenlosen Entladungslampe (LP1), die das zur Zündung und Aufrechterhaltung einer Gasentladung in der Lampe (LP1) erforderliche elektrische Feld erzeugt, in dem Strompfad (C10, R10, j12, j13, IC1) angeordnet ist.

2. Schaltungsanordnung nach Anspruch 1, **dadurch gekennzeichnet, daß** die Schaltungsanordnung mindestens einen Spannungswandler (HW1) und eine Steuerschaltung (IC1) für den mindestens einen Spannungswandler (HW1) sowie einen, dem mindestens einen Spannungswandler (HW1) nachgeschalteten Lastkreis besitzt, wobei die Kontrollmittel mit der Steuerschaltung (IC1) derart zusammenwirken, daß die Steuerschaltung (IC1) nur dann Ansteuerungsimpulse für den mindestens einen Spannungswandler (HW1) generiert, wenn die mindestens eine elektrodenlose Entladungslampe (LP1) an die elektrischen Anschlüsse (j12, j13) angeschlossen ist.

3. Schaltungsanordnung nach Anspruch 2, **dadurch gekennzeichnet, daß** die Kontrollmittel ein Überwachungsglied (S3) und einen Abgriff im Lastkreis (V30) umfassen, wobei
- das elektrische Potential an dem Abgriff (V30) einen ersten Wert besitzt, wenn die mindestens eine Entladungslampe (LP3) an die Schaltungsanordnung angeschlossen ist, und einen zweiten, anderen Wert besitzt, wenn keine Entladungslampe an die Schaltungsanordnung angeschlossen ist, und
- das Überwachungsglied (S3) das elektrische Potential an dem Abgriff (V30) überwacht und ein dem elektrischen Potential entsprechendes Auswertungssignal für die Steuerschaltung (S3) erzeugt.

4. Schaltungsanordnung nach Anspruch 2, **dadurch gekennzeichnet, daß** die Steuerschaltung (IC1) als Integrierter Schaltkreis ausgebildet ist.

5. Schaltungsanordnung nach den Ansprüchen 2 und 4, **dadurch gekennzeichnet, daß** die Kontrollmittel als ein an einen Spannungsversorgungsanschluß (j14) des Integrierten Schaltkreises (IC1) angeschlossenen Strompfad (C10, R10, j12, j13, IC1) ausgebildet sind, der beim Fehlen der mindestens einen elektrodenlosen Entladungslampe (LP1) an den elektrischen Anschlüssen (j12, j13) unterbrochen ist.

6. Schaltungsanordnung nach Anspruch 1, **dadurch gekennzeichnet, daß** der Strompfad (C10, R10, j12, j13, IC1) ein Gleichstrompfad ist.

7. Schaltungsanordnung nach Anspruch 1, **dadurch gekennzeichnet, daß** der Strompfad (C10, R10, j12, j13, IC1) unterbrochen ist, wenn keine Entladungslampe an die Schaltungsanordnung angeschlossen ist.

8. Schaltungsanordnung nach Anspruch 1, **dadurch gekennzeichnet, daß** die elektrischen Anschlüsse (j12, j13) für die mindestens eine elektrodenlose Entladungslampe (LP1) in dem Strompfad (C10, R10, j12, j13, IC1) angeordnet sind.

9. Schaltungsanordnung nach Anspruch 2 oder 4, **dadurch gekennzeichnet, daß** der mindestens eine Spannungswandler (HW1) ein Wechselrichter ist und der Lastkreis als Resonanzkreis ausgebildet ist.

10. Schaltungsanordnung nach den Ansprüchen 1 und 4, **dadurch gekennzeichnet, daß** der Strompfad (C 10, R10, j12, j13, IC1) an einen Spannungsversorgungsanschluß (j14) des Integrierten Schaltkreises (IC1) angeschlossen ist und der Strom- oder Spannungsdetektor der Integrierte Schaltkreis (IC1) ist.

11. Schaltungsanordnung nach den Ansprüchen 1 und 4, **dadurch gekennzeichnet, daß** der Strompfad (C10, R10, j12, j13, IC1) Bestandteil eines Stromversorgungspfades des Integrierten Schaltkreises (IC1) ist und der Strom- oder Spannungsdetektor der Integrierte Schaltkreis (IC1) ist.

## Claims

1. Circuit arrangement for operating at least one electrodeless discharge lamp (LP1) having at least one voltage input (j10, j11) for supplying voltage to the circuit arrangement and electrical terminals (j12, j13); for at least one electrodeless discharge lamp (LP1), in which case
- the circuit arrangement has supervisory means which ascertain (j12, j13) the presence or the absence of the at least one electrodeless discharge lamp (LP1) at the electrical terminals and enable the provision of the ignition and/or operating voltage for the at least one electrodeless discharge lamp (LP1) only when the at least one electrodeless discharge lamp (LP1) is connected to the electrical terminals (j12, j13),
- the supervisory means have a current path (C10, R10, j12, j13, IC1) and a current or voltage detector (IC1), where
- the current path (C10, R10, j12, j13, IC1) has a first electrical resistance if the at least one discharge lamp (LP1) is connected to the circuit arrangement,
- the current path (C10, R10, j12, j13, IC1) has a different electrical resistance if no discharge lamp is connected to the circuit arrangement,
- the current or voltage detector (IC1) monitors the current flow or the voltage drop in the current path (C10, R10, j12, j13, IC1),
- **characterized in that** at least one induction coil (L11) of the at least one electrodeless discharge lamp (LP1), which generates the electric field necessary for igniting and maintaining a gas discharge in the lamp (LP1), is arranged in the current path (C10, R10, j12, j13, IC1).

2. Circuit arrangement according to Claim 1, **characterized in that** the circuit arrangement has at least one voltage converter (HW1) and one control circuit (IC1) for the at least one voltage converter (HW1) and also a load circuit connected downstream of the at least one voltage converter (HW1) where the supervisory means interact with the control circuit (IC1) in such a way that the control circuit (IC1) generates driving pulses for the at least one voltage converter (HW1) only when the at least one electrodeless discharge lamp (LP1) is connected to the electrical terminals (j12, j13).

3. Circuit arrangement according to Claim 2, **characterized in that** the supervisory means comprise a monitoring element (S3) and a tap in the load circuit (V30), where
- the electrical potential at the tap (V30) has a first value if the at least one discharge lamp (LP3) is connected to the circuit arrangement, and has a second, different value if no discharge lamp is connected to the circuit arrangement, and
- the monitoring element (S3) monitors the electrical potential at the tap (V30) and generates an evaluation signal for the control circuit (S3), said evaluation signal corresponding to the electrical potential.

4. Circuit arrangement according to Claim 2, **characterized in that** the control circuit (IC1) is designed as an integrated circuit.

5. Circuit arrangement according to Claims 2 and 4, **characterized in that** the supervisory means are designed as a current path (C10, R10, j12, j13, IC1) which is connected to a voltage supply terminal (j14) of the integrated circuit (IC1) and is interrupted in the absence of the at least one electrodeless discharge lamp (LP1) at the electrical terminals (j12, j13).

6. Circuit arrangement according to Claim 1, **characterized in that** the current path (C10, R10, j12, j13, IC1) is a DC path.

7. Circuit arrangement according to Claim 1, **characterized in that** the current path (C10, R10, j12, j13, IC1) is interrupted if no discharge lamp is connected to the circuit arrangement.

8. Circuit arrangement according to Claim 1, **characterized in that** the electrical terminals (j12, j13) for the at least one electrodeless discharge lamp (LP1) are arranged in the current path (C10, R10, j12, j13, IC1).

9. Circuit arrangement according to Claim 2 or 4, **characterized in that** the at least one voltage converter (HW1) is an inverter and the load circuit is designed as a resonant circuit.

10. Circuit arrangement according to Claims 1 and 4, **characterized in that** the current path (C10, R10, j12, j13, IC1) is connected to a voltage supply terminal (j14) of the integrated circuit (IC1) and the current or voltage detector is the integrated circuit (IC1).

11. Circuit arrangement according to Claims 1 and 4 **characterized in that** the current path (C10, R10, j12, j13, IC1) is part of a power supply path of the integrated circuit (IC1) and the current or voltage detector is the integrated circuit (IC1).

## Revendications

1. Circuit pour faire fonctionner au moins une lampe à décharge sans électrodes (LP1) avec au moins une entrée de tension (j10, j11) pour l'alimentation en tension du circuit et avec des bornes électriques (j12, j13) pour au moins une lampe à décharge sans électrodes (LP1), dans lequel
- le circuit comporte des moyens de contrôle qui détectent la présence ou l'absence de la ou des lampes à décharge sans électrodes (LP1) aux bornes électriques (j12, j13) et qui ne permettent la fourniture de la tension d'allumage et/ou de fonctionnement pour la ou les lampes à décharge sans électrodes (LP1) que lorsque la ou les lampes à décharge sans électrodes (LP1) sont raccordées aux bornes électriques (j12, j13),
- les moyens de contrôle comportent un trajet de courant (C10, R10, j12, j13, IC1) et un détecteur de courant ou de tension (IC1),
- le trajet de courant (C10, R10, j12, j13, IC1) a une première valeur résistive électrique lorsque la ou les lampes à décharge sans électrodes (LP1) sont raccordées au circuit,
- le trajet de courant (C10, R10, j12, j13, IC1) a une autre valeur résistive électrique lorsque aucune lampe à décharge n'est raccordée au circuit,
- le détecteur de courant ou de tension (IC1) surveille le flux de courant ou la chute de tension dans le trajet de courant (C10, R10, j12, j13, IC1),
**caractérisé par le fait qu'**au moins une bobine d'inductance (L11) de la ou des lampes à décharge sans électrodes (LP1), laquelle bobine d'inductance produit le champ électrique nécessaire à l'allumage et au maintien d'une décharge gazeuse dans la lampe (LP1), est placée dans le trajet de courant (C10, R10, j12, j13, IC1).

2. Circuit selon la revendication 1, **caractérisé par le fait que** le circuit comporte au moins un transformateur de tension (HW1) et un circuit de commande (IC1), pour le ou les transformateurs de tension (HW1), ainsi qu'un circuit de charge branché du côté aval du ou des transformateurs de tension (HW1), les moyens de contrôle coopérant avec le circuit de commande (IC1) de telle sorte que le circuit de commande (IC1) ne produit des impulsions de commande pour le ou les transformateurs de tension (HW1) que si la ou les lampes à décharge sans électrodes (LP1) sont raccordées aux bornes électriques (j12, j13).

3. Circuit selon la revendication 2, **caractérisé par le fait que** les moyens de contrôle comprennent un élément de surveillance (S3) et une prise (V30) dans le circuit de charge, dans lequel
- le potentiel électrique à la prise (V30) a une première valeur lorsque la ou les lampes à décharge sans électrodes (LP3) sont raccordées au circuit et a une deuxième autre valeur lorsque aucune lampe à décharge n'est raccordée au circuit, et
- l'élément de surveillance (S3) surveille le potentiel électrique à la prise (V30) et produit un signal d'évaluation correspondant au potentiel électrique pour le circuit de commande (S3).

4. Circuit selon la revendication 2, **caractérisé par le fait que** le circuit de commande (IC1) est conçu comme un circuit intégré.

5. Circuit selon les revendications 2 et 4, **caractérisé par le fait que** les moyens de contrôle sont conçus comme un trajet de courant (C10, R10, j12, j13, IC1) qui est raccordé à une borne d'alimentation en tension (j14) du circuit intégré (IC1) et qui est coupé en l'absence de la ou des lampes à décharge sans électrodes (LP1) aux bornes électriques (j12, j13).

6. Circuit selon la revendication 1, **caractérisé par le fait que** le trajet de courant (C10, R10, j12, j13, IC1) est un trajet de courant continu.

7. Circuit selon la revendication 1, **caractérisé par le fait que** le trajet de courant (C10, R10, j12, j13, IC1) est coupé lorsque aucune lampe à décharge n'est raccordée au circuit.

8. Circuit selon la revendication 1, **caractérisé par le fait que** les bornes électriques (j12, j13) pour la ou les lampes à décharge sans électrodes (LP1) sont placées dans le trajet de courant (C10, R10, j12, j13, IC1).

9. Circuit selon la revendication 2 ou 4, **caractérisé par le fait que** le ou les transformateurs de tension (HW1) sont conçus sous forme d'onduleur et que le circuit de charge est conçu sous forme de circuit résonant.

10. Circuit selon les revendications 1 et 4, **caractérisé par le fait que** le trajet de courant (C10, R10, j12, j13, IC1) est raccordé à une borne d'alimentation en tension (j14) du circuit intégré (IC1) et que le détecteur de courant ou de tension est le circuit intégré (IC1).

11. Circuit selon les revendications 1 et 4, **caractérisé par le fait que** le trajet de courant (C10, R10, j12, j13, IC1) fait partie d'un trajet d'alimentation en courant du circuit intégré (IC1) et que le détecteur de courant ou de tension est le circuit intégré (IC1).
